# EUROPEAN PATENT SPECIFICATION

(11) **EP 0 865 008 B1**
(45) Date of publication and mention of the grant of the patent: **26.10.2005**
(21) Application number: 98301741.9
(22) Date of filing: 10.03.1998
(51) Int. Cl.: G07F 19/00, G07F 7/10, G07F 7/08, H04N 7/16

(54) **Receiver having electronic money terminal function and method for performing this function**
Empfänger mit der Funktion eines Elektronischen Geldautomaten und Verfahren zum ausführen dieser Funktion
Récepteur ayant la fonction de terminal de monnaie électronique et méthode pour exécuter cette fonction

(30) Priority: 14.03.1997 KR 9708749
(43) Date of publication of application: 16.09.1998
(73) Proprietor: SAMSUNG ELECTRONICS CO., LTD., Suwon City, Kyungki-do (KR)
(72) Inventor: Park, Ju-ha, Yongin-city, Kyungki-do (KR)
(74) Representative: Robinson, Ian Michael

(56) References cited:
- WO-A-97/23997
- CA-A- 2 153 727
- US-A- 5 157 717

## Description

The present invention relates to a receiver including an electronic money terminal function and a method for performing the electronic money terminal function, and more particularly, to a receiver whereby various bank services such as deposit and withdrawal of money to and from an electronic money card can be performed at home and on-line by connecting a satellite broadcasting receiver provided with a smart card and a modem to a host computer of the bank, and a method for performing the various bank services.

With the development of a smart card came the concept of its use for electronic money. An electronic money card can be used not only for mass transport such as subways or buses, but also in stores and restaurants. When a person spends all of the money placed on the electronic money card, they can re-use the electronic money card by going to the bank and depositing more money in the electronic money card from their bank account using an electronic money terminal.

WO 97/23997 discloses a receiver for television signals comprising a card reader for either a magnetic strip or smart card based data card. The receiver is suitable for connecting to a host computer of a bank. WO 97/23997 is a co-pending application under Article 54(3)EPC.

US 5,157,717 discloses a portable automated teller machine which is capable of accessing a host computer of a bank over a telephone line. This document forms the precharacterising portion of the independent claims appended hereto.

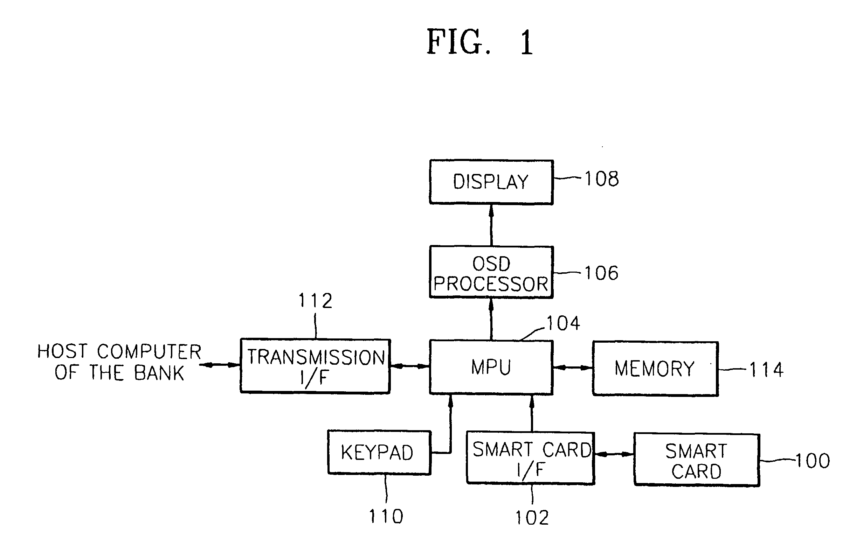

Figure 1 is a block diagram of a typical electronic money terminal. Referring to Figure 1, a smart card interface (hereinafter, I/F) 102 informs a micro processor unit (MPU) 104 that an electronic money smart card was input. The MPU 104 recognizes the input of the smart card, initializes the smart card according to a system program stored in a memory 114, and displays a menu about the types of services on a display 108 by controlling an OSD processor 106. Here, the memory 114 is comprised of a RAM and a ROM. The RAM temporarily stores data required to perform an electronic money terminal function, and the ROM stores system programs and application programs.

When a user selects a desired type of service from the menu about service types displayed on the display 108, using a keypad 110, the MPU 104 applies to a transmission I/F 112 a command for connecting the terminal to a host computer (not shown) of the bank. The transmission I/F 112 connects the terminal to the host computer according to the received command. After the connection of the terminal to the host computer is completed, the user's desired type of service and a user identification number stored in the smart card (electronic money card) 100 are transmitted to the host computer. Then, the host computer applies a command for requesting input of a user's password to the MPU 104 via the transmission I/F 112. The MPU 104 displays a message such as "enter password" on the display 108 by controlling the OSD processor 106. The user inputs their password via the keypad 110 in response to the password input message. The MPU 104 recognizes the input password and transmits the user's password to the host computer of the bank via the transmission I/F 112. The host computer 112 compares the input user's password with a user's password stored in database, and performs the desired service when the two passwords are identical.

However, when a user wants to deposit some money to increase the balance in the electronic money card, they must go to the bank in person and transfer the money from their bank account to the electronic money card using the electronic money terminal.

Accordingly, it is an aim of embodiments of the present invention to provide a method for performing various bank services, such as the deposit and withdrawal of money to and from an electronic money card, at home and on-line, by connecting a receiver provided with a smart card I/F and a modem to a host computer of the bank.

It is another aim of embodiments of the present invention to provide a receiver for performing various bank services, such as the deposit and withdrawal of money to and from an electronic money card, at home and on-line, by connecting a receiver to a host computer of the bank.

According to the present invention there is provided an apparatus and method as set forth in the appended claims. Preferred features of the invention will be apparent from the dependent claims, and the description which follows.

According to a first aspect of the invention, there is provided a method of performing an electronic money terminal function, characterised in that: the method is for an audiovisual receiver including at least a smart card interface and a modem; and said method comprises the steps of: (a) checking that an electronic money smart card is input to the smart card interface in an electronic money terminal mode and initialising the electronic money smart card; (b) selecting a sub-mode for the electronic money terminal mode, wherein said sub-mode includes a deposit mode for depositing money from a user's bank account to said electronic money smart card, a remittance mode for remitting money from said electronic money smart card to said bank account, and a balance inquiry mode for inquiring the balance of said bank account; (c) connecting said audiovisual receiver to a host computer of a bank which issued the electronic money smart card, using said modem; (d) transmitting the selected sub-mode, a personal identification number (PIN) stored in said electronic money smart card, and a secret number input from an external source, to said host computer; and (e) performing said selected sub-mode when said input secret number is identical to a secret number stored in said host computer.

According to a second aspect of the present invention, there is provided a receiver which performs an electronic money terminal function characterised in that: the receiver is an audiovisual receiver which can simultaneously receive charge-free and charged channel signals, said audiovisual receiver comprising: a smart card interface for indicating the input of an electronic money smart card and transmitting a personal identification number (PIN) from said electronic money smart card; a modem for connecting said audiovisual receiver to a host computer of a bank; a memory for storing data representing a screen menu with respect to an electronic money terminal mode and its sub-modes and data representing a telephone number of the bank which issued said electronic money smart card, wherein said sub-modes include at least a deposit mode for depositing money from a user's bank account to said electronic money smart card, a remittance mode for remitting money from said electronic money smart card to said bank account, and a balance inquiry mode for inquiring the balance of said bank account; a controller for recognizing said electronic money terminal mode set by a user and its sub-modes, and transmitting said telephone number data to said modem to connect said modem to said host computer, transmitting said PIN transmitted via said smart card interface and said recognized sub-mode data to said host computer, and applying a control signal according to a command for performing said sub-mode transmitted from said host computer via said modem; and an OSD processor for displaying said screen menu as on-screen display (OSD) information and generating a message, which is required to perform said sub-mode, according to said control signal.

For a better understanding of the invention, and to show how embodiments of the same may be carried into effect, reference will now be made, by way of example, to the accompanying diagrammatic drawings, in which:
Figure 1 is a block diagram of a typical electronic money terminal;
Figure 2 is a block diagram of a satellite broadcasting receiver including an electronic money terminal function according to an embodiment of the present invention;
Figures 3A through 3E are flowcharts for illustrating an electronic money terminal function of the satellite broadcasting receiver according to an embodiment of the present invention; and
Figure 4 is a flowchart for a telephone number setting mode to accomplish the electronic money terminal function of the present invention.

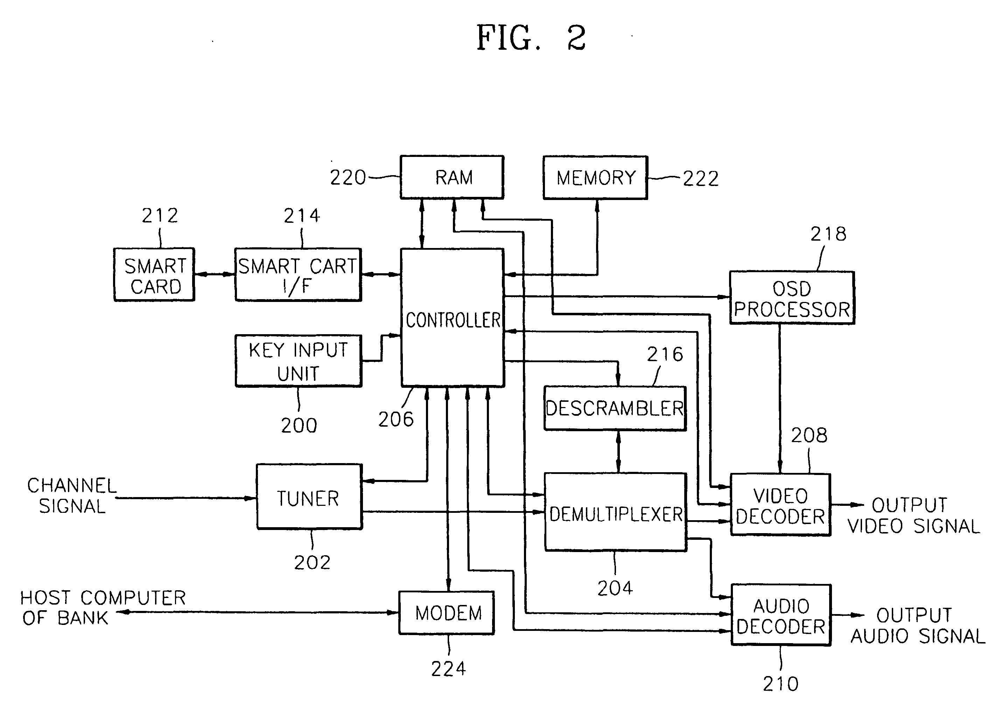

Referring to Figure 2, the output port of a key input unit 200 provided with a keypad is connected to a controller 206. A tuner 202 has an input port to which satellite broadcasting signals of multiple channels are input, an output port connected to an input port of a demultiplexer 204, and a control signal input/output port connected to the controller 206. In the demultiplexer 204, a control signal input/output port and first and second output ports are connected to the controller 206, a video decoder 208 and an audio decoder 210, respectively. The video decoder 208 has a second input port connected to an output port of an OSD processor 218, a control signal input/output port connected to the controller 206, a data input/output port connected to a RAM 220, and an output port through which a decoded video signal is output. The OSD processor 218 has a control signal input port connected to the controller 206. The audio decoder 210 has a control signal input/output port connected to the controller 206, a data input/output port connected to the RAM 220, and an output port through which a decoded audio signal is output. An input/output port of a smart card 212 is connected to a smart card I/F 214 whose input/output port is connected to the controller 206. A descrambler 216 has a control signal input port connected to the controller 206 and an input/output port connected to the demultiplexer 204. The data input/output ports of the RAM 220 and a memory 222 are connected to the controller 206. A modem 224 is connected to a host computer (not shown) of the bank, a program supplying company or a subscriber managing center, via a telephone line. The control signal input/output port of the modem 224 is connected to the controller 206.

The operation of the satellite broadcasting receiver shown in Figure 2 will now be described by dividing the operation into a broadcast receiving function and an electronic money terminal function.

### I. Broadcast receiving function

A channel of a cable television or a VOD receiver, as well as a satellite broadcasting receiver, can be divided into a charge-free channel and a charged channel according to a fee calculation method. The charge-free channel is a channel that everyone can watch without paying a TV subscription fee, needing only a receiver. The charged channel can be again divided into a subscriber channel and a pay-per-view channel. In the subscriber channel, when a subscriber subscribes to a channel to watch a program of the channel, they can watch all programs in the channel if they pay a TV subscription fee based on a predetermined period (e.g., a month) regardless of the time for which programs are watched. The pay-per-view channel is a channel where a TV subscription fee is paid only for the programs that a viewer watches. As for the pay-per-view channel, data of charged programs are scrambled to prevent people who do not pay the TV subscription fee from watching TV.

Therefore, the broadcasting reception can be divided into the charge-free channel reception, the subscriber channel reception and the pay-per-view channel reception.

### (i) Upon charge-free channel reception

A plurality of channel signals multiplexed in transport packet form are input to the demultiplexer 204 via the tuner 202. The demultiplexer 204 divides multiplexed data, on a channel selected by a user using the key input unit 200 from the plurality of multiplexed channels received via the tuner 202, into video and audio data each having a packet identification (PID) of the selected channel. The controller 206 checks a control bit representing scramble information (information on whether the selected channel is scrambled) included in the header of the divided data. Then, if the selected channel is not scrambled, the controller 206 does not operate the descrambler 216, and applies a control signal indicating the above fact to the demultiplexer 204. At this time, the demultiplexer 204 applies the video and audio data, divided from a transport packet of the selected channel according to the control signal provided by the controller 206, to the video and audio decoders 208 and 210, respectively. The video and audio decoders 208 and 210 decode the divided video and audio data and output decoded video and audio signals through a display (not shown) and a speaker (not shown), respectively. Here, the key input unit 200 can be keys installed on a remote controller or a receiver set.

### (ii) Upon subscriber channel reception

A plurality of channel signals multiplexed in a transport packet are applied to the demultiplexer 204 through the tuner 202. The demultiplexer 204 divides multiplexed data, on a channel selected by a user using the key input unit 200 from the plurality of multiplexed channels received through the tuner 202, into video and audio data each having the PID of the selected channel, and applies the headers of the divided data to the controller 206. The controller 206 checks the control bit representing the scramble information included in the divided header. If it is determined that the selected channel is scrambled, first, a check of whether the smart card 212 was inserted is made to determine whether the viewer is a charged channel subscriber. If the smart card 212 was not inserted, the controller 206 applies a control signal to the OSD processor 218 and displays on a display a message requesting the subscriber to insert the smart card 212. Then, the controller 206 reads information on a personal identification number (PIN) from the smart card 212, compares the read information with PIN information prestored in the memory 222 or PIN information provided by an external source, and applies a control signal to allow the de-scrambler 216 to operate if the PIN information from the smart card 212 is the same as that prestored in the memory 222 or that provided by the external source. Here, the PIN information input from the external source is PIN information input by the user via the key input unit 200. At this time, the descrambler 216 restores the scrambled video and audio data divided by the demultiplexer 204 to non-scrambled signals, and applies the non-scrambled video and audio data to the video and audio decoders 208 and 210, respectively, via the demultiplexer 204. The video and audio decoders 208 and 210 decode the descrambled video and audio data and output the decoded video and audio signals through a display and a speaker.

At this time, in the subscriber channel, the TV subscriber fee is calculated on the basis of a predetermined period of time, so watched items do not need to be stored in the smart card 212 for a special purpose.

### (iii) Upon pay-per-view channel

The memory 222 stores help screen menu data including information guiding the selection of a pay-per-view program. The controller 206 recognizes the input of the smart card 212 and displays a help screen by controlling the OSD processor 218. A subscriber selects a menu for a pay-per-view program, transmitted from a program supplying company, from displayed menus using the key input unit 200.

A pay-per-view channel signal transmitted according to the selection of a viewer is applied to the demultiplexer 204 through the tuner 202. The pay-per-view channel signal includes program guiding data, entitlement control message (ECM) data and program data. Here, the ECM data is comprised of a channel number, present time information, an ID for determining whether a viewer is qualified to watch a pay-per-view program, and a toggle bit indicating the start and end of a program, and input at a predetermined period (e.g., 8 seconds). The demultiplexer 204 demultiplexes the pay-per-view channel signal received through the tuner 202 into the program guiding data, the ECM data and the program data. After the demultiplexed ECM data is applied to the smart card 212 through the controller 206, and when an ID, included in the ECM data, for determining whether a viewer is qualified to receive a program is identical to that stored in the smart card 212, the smart card 212 decodes the applied ID and applies the same as a control word to the de-scrambler 216 via the controller 206. Here, the smart card 212 includes a memory and an MPU. The memory stores an ID representing a qualification for watching programs, and PIN information of the smart card, and has a storage area for storing a list of items watched. The MPU controls the writing and reading of data stored in the memory, and decodes the ECM data transmitted through the controller 206 to output the same as a control word.

The descrambler 216 receives program data demultiplexed in the demultiplexer 204 according to a control word applied through the controller 206 and descrambles the scrambled program data. The demultiplexer 204 divides the descrambled program data received from the descrambler 216 into video and audio data. The video and audio decoders 208 and 210 decode the de-scrambled video and audio data, respectively, applied from the demultiplexer 204 and output the decoded video and audio signals to a display and a speaker. At this time, a list of the items of a pay-per-view program that a user selects and watches is stored in the smart card 212, and transmitted to a program supplying company via the modem 224 after a predetermined period of time.

Meanwhile, the RAM 220 writes and reads data processed by the controller 206 and data necessary for the operation of the decoders 208 and 210 thereto and therefrom. Preferably, the memory 222 is an electrically erasable and programmable ROM (E²PROM) or a flash memory, to store system programs, setting parameters and data which are to be stored even when the receiver is turned off, and to store new programs downloaded via the modem 224.

### II. Electronic money terminal function

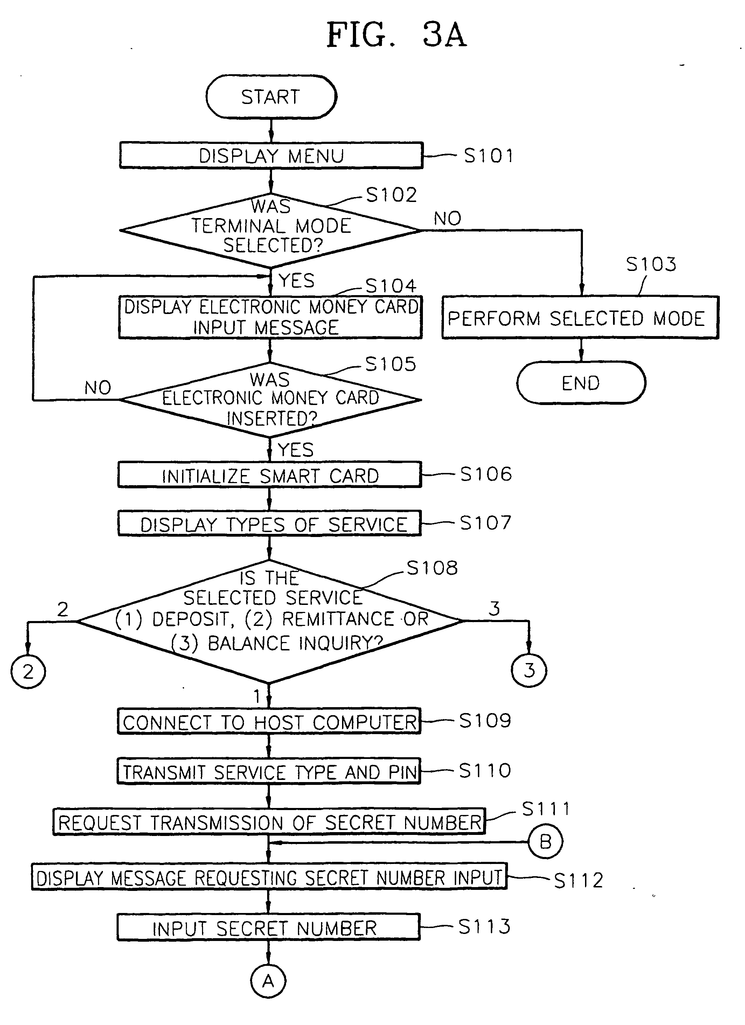

The electronic money terminal function according to the preferred embodiment of the present invention can be simply performed by a change of software installed in the memory 222, without requiring changes to the hardware of the satellite broadcasting receiver shown in Figure 2. This function will be described referring to FIGS. 3A through 4.

First, the memory 222 stores not only help menu data for satellite broadcasting reception but also menu data for electronic money terminal services, and telephone number data required to connect to a host computer of the bank. The telephone number data can be set by the user.

Immediately after power is applied to the receiver, the OSD processor 218 displays a main screen menu according to a control signal of the controller 206, as in step S101 of Figure 3A. A subscriber selects a terminal mode for electronic money terminal function from the main screen menu using the keypad of the key input unit 200, as in step S102 of Figure 3A. Here, the terminal mode can be directly selected by a key (terminal mode selection key) installed on the key input unit 200.

If the terminal mode was not selected in step S102, the function of the other selected mode is performed as in step S103 of Figure 3A. However, if the terminal mode was selected in step S102, the controller 206 controls the OSD processor 218 to display a message requesting the removal of the satellite broadcasting smart card and the input of the electronic money smart card of a user, in step S104 of Figure 3A. The controller 206 checks if the electronic money smart card 212 was inserted, in step S105 of Figure 3A. If the electronic money smart card 212 was not inserted, the procedure returns to step S104. On the other hand, if the electronic money smart card 212 was inserted, the electronic money smart card 212 is initialized in step S106 of Figure 3A.

After the electronic money smart card 212 is initialized in step S106, the controller 206 displays a sub menu representing the types of services for an electronic money terminal mode, by controlling the OSD processor 218, in step S107 of Figure 3A. For instance, the displayed sub menu on the service types can include (1) a deposit service mode for depositing a desired amount of money from a bank account to an electronic money card, (2) a remittance service mode for remitting money from an electronic money card to a bank account, and (3) a balance inquiry service mode for inquiring the balance of a bank account.

First, it is determined whether a service selected by a user is the deposit service mode (1) for depositing money from a bank account to an electronic money card, in step S108 of Figure 3A. The receiver tries to make contact by making a call with a bank on-line contact number prestored in the memory 222, using the modem 224, in step S109 of Figure 3A. Here, the bank on-line contact number, stored in the memory 222, i.e., a telephone number, can be set by the user.

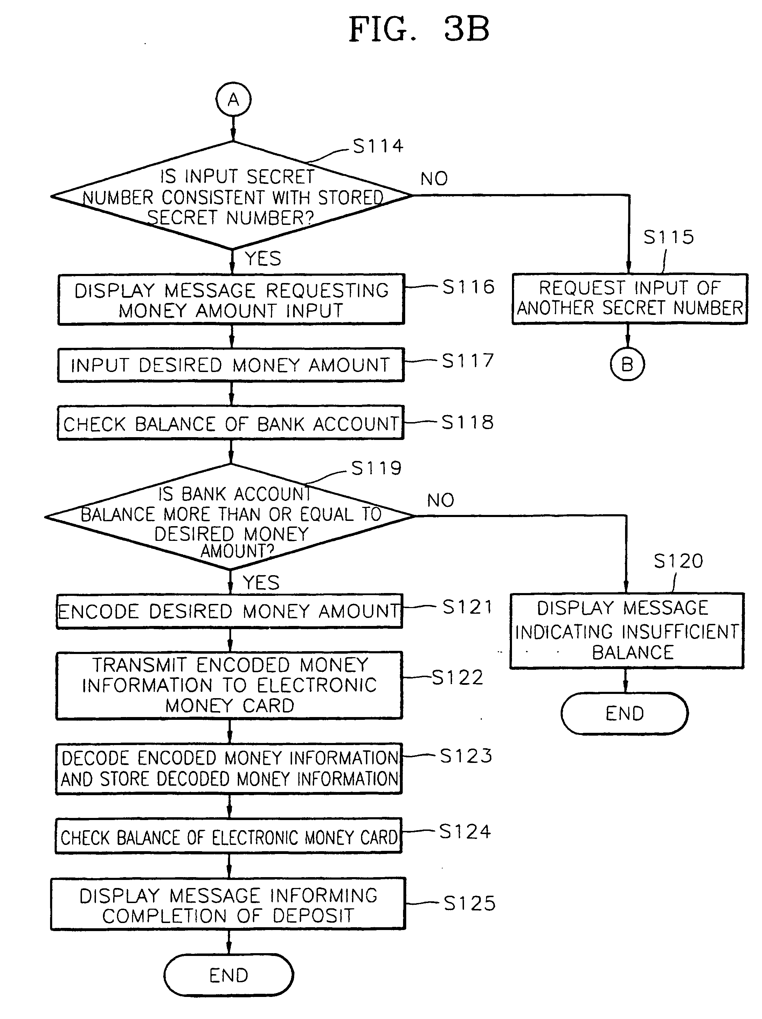

When the receiver is connected to the host computer of the bank via the modem 224, the controller 206 transmits a service type (here, the deposit service (1)) desired by the user and a PIN stored in the electronic money smart card 212, to the host computer via the modem 224, in step S110 of Figure 3A. Then, the host computer transmits a command requesting the transmission of a user's secret number to the controller 206 via the modem 224, in step S111 of Figure 3A. The controller 206 displays a message requesting the input of the secret number on the display screen, by controlling the OSD processor 218, in step S112 of Figure 3A. When the user inputs their secret number through the keypad of the key input unit 200 in response to the secret number input request message, the controller 206 recognizes the key data and transmits the secret number to the host computer via the modem 224, in step S113 of Figure 3A. The host computer compares the secret number input in step S113 with the user's secret number stored in data base in step S114 of Figure 3B. When they are consistent with each other, the desired deposit service mode is performed, and otherwise, a message requesting the input of another secret number is transmitted to the controller 206 via the modem 224, and the procedure then returns to the step S112, in step S115 of Figure 3B.

When the prestored secret number is consistent with the input secret number in step S114, the host computer transmits a control signal indicating the above fact to the controller 206 via the modem 224, and the controller 206 displays on a screen a message requesting the input of the desired amount of money by controlling the OSD processor 218, in step S116 of Figure 3B. When the user inputs the desired money amount through the keypad of the key input unit 200 in step S117 of Figure 3B, the input money information is transmitted to the host computer via the controller 206 and the modem 224, and the host computer checks the balance of the user's bank account, in step S118 of Figure 3B. After the checked balance of the bank account is compared with the amount of money input, in step S119 of Figure 3B, if the balance of the bank account is smaller than the requested money amount, a control signal indicating the above fact is transmitted to the controller 206 via the modem 224. At this time, the controller 206 displays a message indicating the insufficient balance on a screen by controlling the OSD processor 218, in step S120 of Figure 3B.

However, if the balance of the bank account is more than or equal to the requested amount of money in step S119, information corresponding to the requested amount of money is encoded in step S121 of Figure 3B, and the encoded money information is transmitted to the electronic money smart card 212 in step S122 of Figure 3B. The MPU inside the electronic money smart card 212 is operated to decode the encoded money information and store the result in the memory inside the electronic money card 212, in step S123 of Figure 3B. The controller 206 transmits a control signal for checking the balance of the electronic money card, to the electronic money smart card 212 in step S124 of Figure 3B. The controller 206 informs the user of the balance information output from the electronic money smart card 212 by controlling the OSD processor 118, and completes the deposit service, in step S125 of Figure 3B.

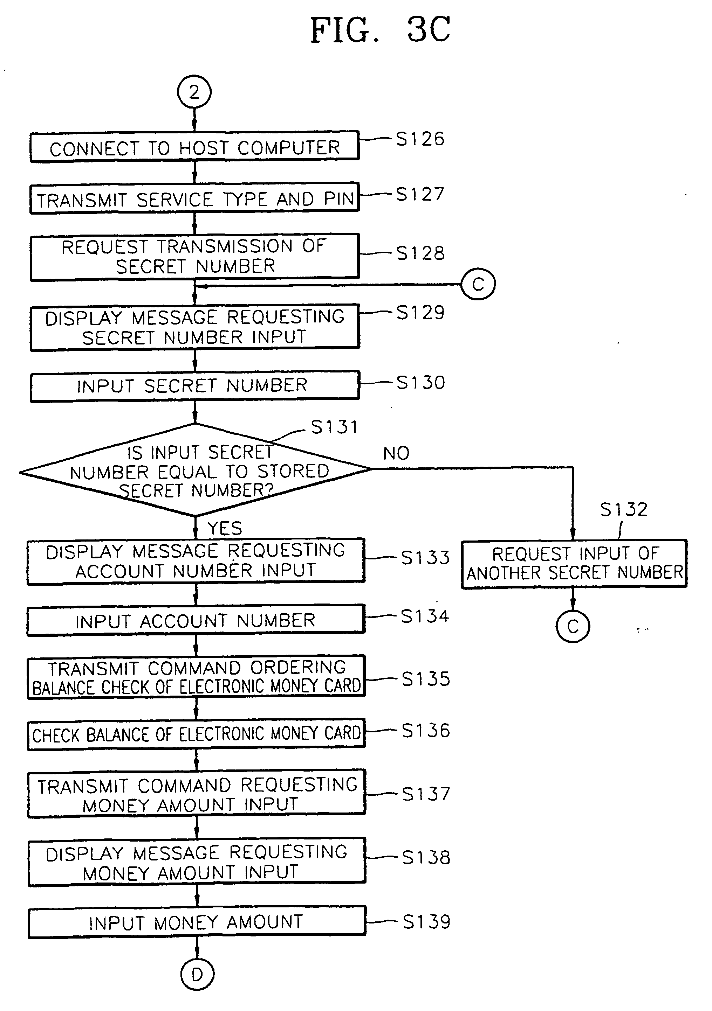

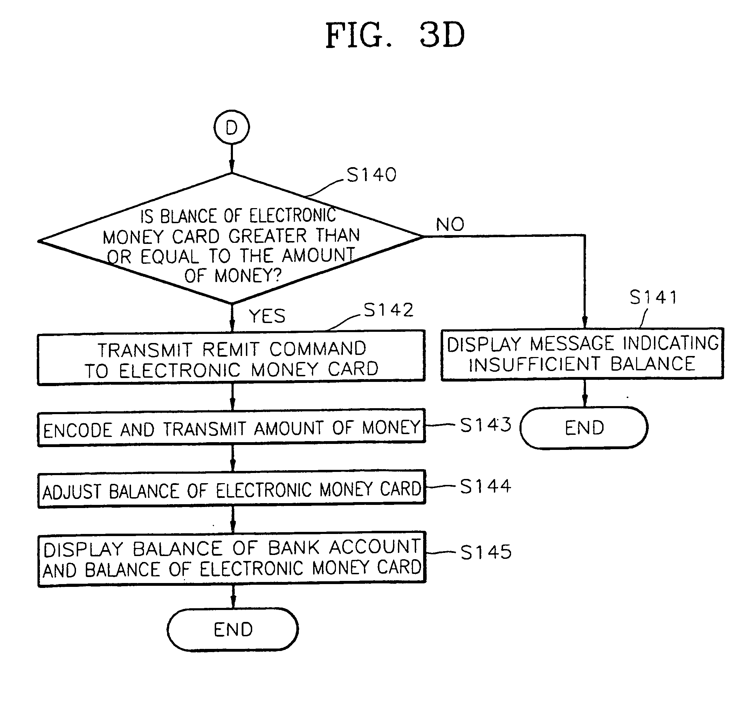

Meanwhile, if the remittance service mode (2) for remitting money from the electronic money card to the user's bank account was selected in step S108, then steps S126 through S145 shown in FIGS. 3C and 3D are performed as follows.

The receiver tries to connect by making a call to an on-line contact number of the bank, prestored in the memory 222, using the modem 224, in step S126 of Figure 3C. When the receiver is connected to the host computer of the bank via the modem 224, the controller 206 transmits a service type (here, the remittance service 2) desired by the user and the PIN, stored in the electronic money smart card 212, to the host computer via the modem 224, in step S127 of Figure 3C. Then, the host computer transmits a command requesting the transmission of the user's secret number, to the controller 206 via the modem 224 in step S128 of Figure 3C. The controller 206 displays a message requesting the input of the secret number on a screen, by controlling the OSD processor 218, in step S129 of Figure 3C. When the user inputs their secret number in response to the secret number input request message, through the keypad of the key input unit 200, the controller 206 recognizes the data from the keypad and transmits the same to the host computer via the modem 224, in step S130 of Figure 3C. The host computer compares the secret number input in step S130 with the user's secret number stored in a data base, in step S131 of Figure 3C. If they are consistent with each other, the desired remittance service is performed, and otherwise, a command requesting to again input another secret number is transmitted to the controller 206 via the modem 224, in step S132 of Figure 3C, and then the procedure returns to the step S129.

When the input secret number is the same as the prestored secret number in step S131, the host computer transmits a control signal to the controller 206 via the modem 224. At this time, the controller 206 displays a message requesting the input of an account number of the user on a screen by controlling the OSD processor 218 according to the control signal, in step S133 of Figure 3C. The user inputs an account number through the keypad of the key input unit 200 in response to the account number input request message, in step S134 of Figure 3C.

After the input account number is transmitted to the host computer via the modem 224, the host computer transmits a command, ordering the balance of the electronic money card to be checked, to the electronic money smart card 212 via the modem 224 and the controller 206, in step S135 of Figure 3C. The electronic money smart card 212 checks the balance and transmits to the host computer encoded information on the balance checked according to the above command, in step S136 of Figure 3C. After the host computer transmits a command requesting the input of the amount of money to the controller 206 via the modem 224 in step S137 of Figure 3C, the controller 206 displays a message requesting the input of the amount of money by controlling the OSD processor 218, in step S138 of Figure 3C. The amount of money is input through the key input unit 200 in response to the message, and information on the input amount of money is transmitted to the host computer via the controller 206 and the modem 224, in step S139 of Figure 3C. The host computer compares the amount of money input in step S139 with the balance of the electronic money card checked in step S136 in step S140 of Figure 3D. When the balance of the electronic money card is smaller than the input amount of money, a control signal indicating the insufficient balance is transmitted to the controller 206 via the modem 224, and, at this time, the controller 206 displays a message indicating the insufficient balance on a screen, by controlling the OSD processor 218, in step S141 of Figure 3D.

When the balance of the electronic money card is more than or equal to the input amount of money, a remittance command is generated and transmitted to the electronic money smart card 212 via the modem 224 and the controller 206, in step S142 of Figure 3D. The electronic money smart card 212 transmits encoded money data corresponding to the input amount of money to the host computer via the controller 206 and the modem 224, in step S143 of Figure 3D. The electronic money smart card 212 remits the input amount of money to the bank account and adjusts the balance of the electronic money card, in step S144 of Figure 3D. After the host computer informs the controller 206 via the modem 224 that the desired money was remitted from the electronic money card to the user's bank account, the controller 206 displays the balance of the bank account and the new balance of the electronic money card to the user by controlling the OSD processor 218, and completes the remittance service, in step S145 of Figure 3D.

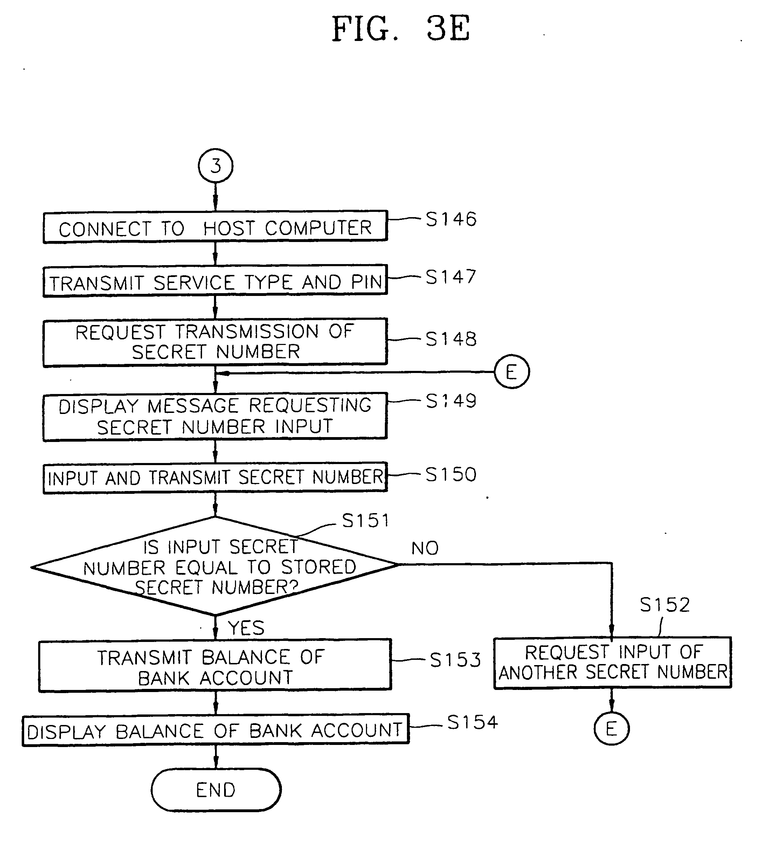

Meanwhile, when the balance inquiry service mode (3) for inquiring the balance of the user's bank account was selected in step S108, steps S146 through S154 shown in Figure 3E are performed as follows.

The receiver tries to connect by making a call to the on-line connection number of the bank prestored in the memory 222 using the modem 224, in step S146 of Figure 3E. When the receiver is connected to the host computer of the bank via the modem 224, the controller 206 transmits a service type (here, the balance inquiry service 3) desired by a user and the PIN stored in the electronic money smart card 212, via the modem 224 to the host computer, in step S147 of Figure 3E. Then, the host computer transmits a command requesting the transmission of the secret number of the user to the controller 206 via the modem 224 in step S148 of Figure 3E. At this time, the controller 206 displays on a screen a message requesting the input of the secret number, by controlling the OSD processor 218, in step S149 of Figure 3E. When the user inputs their secret number through the key input unit 200 in response to the secret number input request message, the controller 206 recognizes the key input data and transmits the user's secret number to the host computer via the modem 224, in step S150 of 3E. The host computer compares the secret number input in step S150 with the user's secret number stored in a data base, in step S151 of Figure 3E. Then, if they are identical to each other, the desired balance inquiry service is performed, and otherwise, a command requesting the input of another secret number is transmitted to the controller 206 via the modem 224, in step S152 of Figure 3E, and the procedure then returns to the step S149. When the prestored secret number is consistent with the input secret number in step S151, the host computer transmits information on the balance of the user's bank account to the controller 206 via the modem 224, in step S153 of Figure 3E. At this time, the controller 206 displays the transmitted balance information by controlling the OSD processor 218, and then finishes the balance inquiry service, in step S154 of Figure 3E.

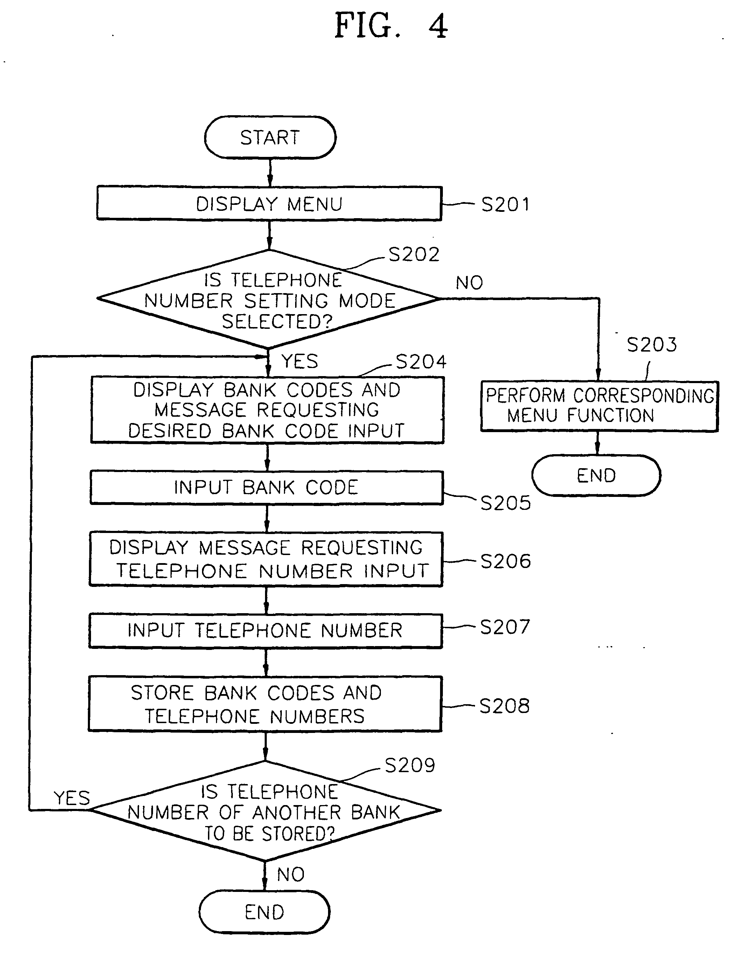

Figure 4 is a flowchart illustrating a process for storing a telephone number of the bank which issues the electronic money card and the user's bank account, to automatically connect the receiver to the host computer of the bank in step S109 of Figure 3A, step S126 of Figure 3C and step S146 of Figure 3E, upon performance of the electronic money terminal function according to the present invention. The method of Figure 4 can be performed on selecting a telephone number setting mode from a main screen menu, but also as part of step S103 of Figure 3A. Also, this telephone number setting program can be stored in the memory 222.

Referring to Figure 4, immediately after power is applied to the receiver, the OSD processor 218 displays a menu according to a control signal of the controller 206, in step S201. A subscriber selects the telephone number setting mode from the displayed menu through the key input unit 200 in step S202. If the telephone number setting mode is not selected in step S202, a function depending on a selected mode is performed, in step S203.

When the mode selected in step S202 is the telephone number setting mode, a unique bank code supplied to each bank is read from the memory 222, which stores the respective unique bank codes, and displayed on a screen simultaneously with a message requesting the input of a desired bank code, in step S204. A desired bank code among the displayed bank codes is input through the keypad of the key input unit 200, in step S205. After the bank code is input, a message requesting the input of a telephone number of the selected bank is displayed on the screen, in step S206. The user inputs the telephone number in response to the telephone number input request message through the keypad of the key input unit 200, in step S207. The input bank code and telephone number are stored in the memory 222 in step S208. It is determined in step S209 whether the telephone number of another bank will be stored. If there is a telephone number of another bank to be stored, the procedure returns to the step S204, and otherwise, the process is complete.

The present invention is applicable to not only the satellite broadcasting receiver but also all kinds of apparatuses having a modem and a smart card input portion.

As described above, a receiver according to the present invention can perform various functions by being provided with an electronic money terminal function. Also, people do not need to directly go to the bank to deposit or withdraw money to or from an electronic money card.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of performing an electronic money terminal function, **characterised in that**:
the method is for an audiovisual receiver including at least a smart card interface and a modem; and
said method comprises the steps of:
(a) checking that an electronic money smart card is input to the smart card interface in an electronic money terminal mode and initialising the electronic money smart card;
(b) selecting a sub-mode for the electronic money terminal mode, wherein said sub-mode includes a deposit mode for depositing money from a user's bank account to said electronic money smart card, a remittance mode for remitting money from said electronic money smart card to said bank account, and a balance inquiry mode for inquiring the balance of said bank account;
(c) connecting said audiovisual receiver to a host computer of a bank which issued the electronic money smart card, using said modem;
(d) transmitting the selected sub-mode, a personal identification number (PIN) stored in said electronic money smart card, and a secret number input from an external source, to said host computer; and
(e) performing said selected sub-mode when said input secret number is identical to a secret number stored in said host computer.

2. The electronic money terminal method of claim 1, wherein said step (a) comprises the steps of:
(a1) displaying a main screen menu;
(a2) selecting an electronic money terminal mode from said displayed main screen menu; and
(a3) initializing an electronic money smart card after said electronic money terminal mode is selected.

3. The electronic money terminal method of claim 2, wherein said step (a) further comprises the steps of:
(a4) selecting a telephone number setting mode from said main screen menu displayed in step (a1);
(a5) inputting the bank code and telephone number of the bank having issued said electronic money smart card; and
(a6) storing data representing said input bank code and telephone number.

4. The electronic money terminal method of claim 3, wherein in said step (c), said audiovisual receiver is connected to said host computer by transmitting the telephone number data stored in said step (a6) through said modem.

5. The electronic money terminal method of claim 1, wherein said method further comprises the steps of:
setting an electronic money terminal mode;
receiving the electronic money smart card and initializing said smart card; and
displaying the sub-modes of the selected electronic money terminal mode.

6. The electronic money terminal method of claim 5, wherein the method includes the steps of:
selecting the deposit mode for depositing money from a user's bank account to said electronic money smart card in said displayed sub-modes;
connecting said audiovisual receiver to the host computer of the bank which issued said electronic money smart card, using said modem;
transmitting a deposit mode signal representing the selected deposit mode and the personal identification number (PIN) stored in said electronic money smart card, to said host computer; and
inputting the secret number in response to a request from said host computer for transmission of the secret number;
inputting an amount of money if said input secret number is identical to a secret number stored in said host computer; and
encoding the input amount of money and transmitting the encoded money to said electronic money smart card when the balance of said bank account is more than or equal to said input amount of money.

7. The electronic money terminal method of claim 6, wherein said method further comprises the step of:
displaying information on the balance of said electronic money smart card to which said input amount of money was deposited, after said encoded money information is transmitted to said electronic money smart card.

8. The electronic money terminal method of claim 6 or 7, wherein said step of inputting the amount of money further comprises the step of:
displaying a message requesting the input of another secret number, when said input secret number is not consistent with the secret number stored in said host computer.

9. The electronic money terminal method of claim 6, 7 or 8, wherein said step of encoding the input amount of money further comprises the step of:
displaying a message indicating the insufficient balance of said bank account when the balance of said bank account is smaller than said input amount of money.

10. The electronic money terminal method of claim 5, wherein said method further comprises the steps of:
selecting the remittance mode for remitting an amount of money from said electronic money smart card to said bank account, from said displayed sub-modes;
connecting said audiovisual receiver to said host computer of the bank which issued said electronic money smart card, using said modem;
transmitting a remittance mode signal representing said selected remittance mode and the PIN stored in said electronic money smart card to said host computer;
inputting the secret number in response to a request from said host computer for transmission of the secret number;
comparing said input secret number with a secret number stored in said host computer, and, if they are identical to each other, inputting an account number in response to a request from said host computer for the input of said account number;
encoding the balance of said electronic money smart card according to said host computer's command ordering a check of the balance of said electronic money smart card, and transmitting information on the encoded balance to said host computer;
inputting an amount of money according to a request from said host computer for the input of an amount of money; and
transmitting information on said encoded amount of money from said electronic money smart card to said host computer according to a remittance command from said host computer, when the balance of said bank account is greater than or equal to said input amount of money.

11. The electronic money terminal method of claim 10, wherein said method further comprises the steps of:
adjusting the balance of said electronic money smart card after said step of transmitting information on said encoded amount of money from said electronic money smart card to said host computer; and
displaying the adjusted balance of said electronic money smart card and the balance of said bank account to which said input amount of money was deposited.

12. The electronic money terminal method of claim 10 or 11, wherein said step of comparing the input secret number further comprises the step of:
displaying a message requesting the input of another secret number, when said input secret number is not consistent with said secret number stored in said host computer.

13. The electronic money terminal method of claim 10, 11 or 12, wherein said step of transmitting information on said encoded amount of money from said electronic money smart card to said host computer further comprises the step of:
displaying a message indicating the insufficient balance of said bank account, when the balance of said bank account is smaller than said input amount of money.

14. The electronic money terminal method of claim 5, wherein said method further comprises the steps of:
selecting the balance inquiry mode for inquiring the balance of a bank account, from said displayed sub-modes;
connecting said audiovisual receiver to said host computer of said bank which issued said electronic money smart card, using said modem;
transmitting a balance inquiry mode signal representing said selected balance inquiry mode and the PIN stored in said electronic money smart card, to said host computer;
inputting the secret number in response to a request from said host computer for transmission of said secret number; and
displaying the balance of said bank account when said input secret number is consistent with a secret number stored in said host computer.

15. The electronic money terminal method of any preceding claim, wherein said method comprises the steps of:
displaying a main screen menu; and
selecting the electronic money terminal mode from said displayed main screen menu.

16. The electronic money terminal method of claim 15, wherein said method further comprises the steps of:
selecting a telephone number setting mode from said displayed main screen menu;
inputting the bank code and telephone number of the bank which issued said electronic money smart card; and
storing data representing said input bank code and telephone number.

17. The electronic money terminal method of claim 16, wherein said stored telephone number data is used by said modem to connect said audiovisual receiver to said host computer.

18. A receiver which performs an electronic money terminal function **characterised in that**:
the receiver is an audiovisual receiver which can simultaneously receive charge-free and charged channel signals, said audiovisual receiver comprising:
a smart card interface (214) for indicating the input of an electronic money smart card (212) and transmitting a personal identification number (PIN) from said electronic money smart card (212);
a modem (224) for connecting said audiovisual receiver to a host computer of a bank;
a memory (222) for storing data representing a screen menu with respect to an electronic money terminal mode and its sub-modes and data representing a telephone number of the bank which issued said electronic money smart card (212), wherein said sub-modes include at least a deposit mode for depositing money from a user's bank account to said electronic money smart card (212), a remittance mode for remitting money from said electronic money smart card (212) to said bank account, and a balance inquiry mode for inquiring the balance of said bank account;
a controller (206) for recognizing said electronic money terminal mode set by a user and its sub-modes, and transmitting said telephone number data to said modem (224) to connect said modem (224) to said host computer, transmitting said PIN transmitted via said smart card interface and said recognized sub-mode data to said host computer, and applying a control signal according to a command for performing said sub-mode transmitted from said host computer via said modem (224); and
an OSD processor (218) for displaying said screen menu as on-screen display (OSD) information and generating a message, which is required to perform said sub-mode, according to said control signal.

19. The receiver of claim 18, wherein telephone number data set by a user is stored in said memory (222).

## Patentansprüche

1. Verfahren zum Durchführen einer elektronischen Geldautomatenfunktion, **dadurch gekennzeichnet, dass**:
das Verfahren für einen audiovisuellen Empfänger bestimmt ist, der wenigstens eine Smartcard-Schnittstelle und ein Modem enthält; und
das Verfahren die folgenden Schritte umfasst:
(a) Prüfen, ob eine elektronische Geld-Smartcard in die Smartcard-Schnittstelle in einem elektronischen Geldautomaten-Modus eingeführt ist, und Initialisieren der elektronischen Geld-Smartcard;
(b) Auswählen eines Unter-Modus für den elektronischen Geldautomaten-Modus, wobei der Unter-Modus einen Lademodus zum Laden von Geld von einem Bankkonto des Benutzers auf die elektronische Geld-Smartcard, einen Überweisungs-Modus zum Überweisen von Geld von der elektronischen Geld-Smartcard auf das Bankkonto und einen Kontostand-Abfrage-Modus zum Abfragen des Kontostandes des Bankkontos einschließt;
(c) Verbinden des audiovisuellen Empfängers mit einem Host-Computer einer Bank, die die elektronische Geld-Smartcard ausgegeben hat, unter Verwendung des Modems;
(d) Senden des ausgewählten Unter-Modus, einer persönlichen Identifikationsnummer (PIN), die in der elektronischen Geld-Smartcard gespeichert ist, und einer Geheimnummer, die von einer externen Quelle eingegeben wird, zu dem Host-Computer; und
(e) Durchführen des ausgewählten Unter-Modus, wenn die eingegebene Geheimnummer mit einer in dem Host-Computer gespeicherten Geheimnummer identisch ist.

2. Elektronisches Geldautomaten-Verfahren nach Anspruch 1, wobei der Schritt (a) die folgenden Schritte umfasst:
(a1) Anzeigen eines Haupt-Bildschirmmenüs;
(a2) Auswählen eines elektronischen Geldautomaten-Modus aus dem angezeigten Haupt-Bildschirmmenü; und
(a3) Initialisieren einer elektronischen Geld-Smartcard, nachdem der elektronische Geldautomaten-Modus ausgewählt ist.

3. Elektronisches Geldautomaten-Verfahren nach Anspruch 2, wobei der Schritt (a) des Weiteren die folgenden Schritte umfasst:
(a4) Auswählen eines Telefonnummer-Einstellmodus aus dem Haupt-Bildschirmmenü, das in Schritt (a1) angezeigt wird;
(a5) Eingeben der Bankleitzahl und der Telefonnummer der Bank, die die elektronische Geld-Smartcard ausgegeben hat; und
(a6) Speichern von Daten, die die eingegebene Bankleitzahl und Telefonnummer darstellen.

4. Elektronisches Geldautomaten-Verfahren nach Anspruch 3, wobei in dem Schritt (c) der audiovisuelle Empfänger mit dem Host-Computer verbunden wird, indem die Telefonnummer-Daten, die in dem Schritt (a6) gespeichert werden, über das Modem gesendet werden.

5. Elektronisches Geldautomaten-Verfahren nach Anspruch 1, wobei das Verfahren des Weiteren die folgenden Schritte umfasst:
Einstellen eines elektronischen Geldautomaten-Modus;
Aufnehmen der elektronischen Geld-Smartcard und Initialisieren der Smartcard; und
Anzeigen der Unter-Modi des ausgewählten elektronischen Geldautomaten-Modus.

6. Elektronisches Geldautomaten-Verfahren nach Anspruch 5, wobei das Verfahren die folgenden Schritte einschließt:
Auswählen des Lademodus zum Laden von Geld von einem Bankkonto des Benutzers auf die elektronische Geld-Smartcard in den angezeigten Unter-Modi;
Verbinden des audiovisuellen Receivers mit dem Host-Computer der Bank, die die elektronische Geld-Smartcard ausgegeben hat, unter Verwendung des Modems;
Senden eines Lade-Modus-Signals, das den ausgewählten Lade-Modus darstellt, und der persönlichen Identifikationsnummer (PIN), die in der elektronischen Geld-Smartcard gespeichert ist, zu dem Host-Computer; und
Eingeben der Geheimnummer in Reaktion auf eine Anforderung von dem Host-Computer zum Senden der Geheimnummer;
Eingeben einer Geldsumme, wenn die eingegebene Geheimnummer identisch mit einer in dem Host-Computer gespeicherten Geheimnummer ist; und
Kodieren der eingegebenen Geldsumme und Senden des kodierten Geldes zu der elektronischen Geld-Smartcard, wenn der Kontostand des Bankkontos über der eingegebenen Geldsumme liegt oder ihr entspricht.

7. Elektronisches Geldautomaten-Verfahren nach Anspruch 6, wobei das Verfahren des Weiteren den folgenden Schritt umfasst:
Anzeigen von Informationen über den Kontostand der elektronischen Geld-Smartcard, auf die die eingegebene Geldsumme geladen wurde, nachdem die kodierten Geldinformationen zu der elektronischen Geld-Smartcard gesendet worden sind.

8. Elektronisches Geldautomaten-Verfahren nach Anspruch 6 oder 7, wobei der Schritt des Eingebens der Geldsumme des Weiteren den folgenden Schritt umfasst:
Anzeigen einer Nachricht, die die Eingabe einer weiteren Geheimnummer anfordert, wenn die eingegebene Geheimnummer nicht mit der in dem Host-Computer gespeicherten Geheimnummer übereinstimmt.

9. Elektronisches Geldautomaten-Verfahren nach Anspruch 6, 7 oder 8, wobei der Schritt des Kodierens der eingegebenen Geldsumme des Weiteren den folgenden Schritt umfasst:
Anzeigen einer Nachricht, die den unzureichenden Kontostand des Bankkontos anzeigt, wenn der Kontostand des Bankkontos unter der eingegebenen Geldsumme liegt.

10. Elektronisches Geldautomaten-Verfahren nach Anspruch 5, wobei das Verfahren des Weiteren die folgenden Schritte umfasst:
Auswählen des Überweisungs-Modus zum Überweisen einer Geldsumme von der elektronischen Geld-Smartcard auf das Bankkonto aus dem angezeigten Unter-Modi;
Verbinden des audiovisuellen Empfängers mit dem Host-Computer der Bank, die die elektronische Geld-Smartcard ausgegeben hat, unter Verwendung des Modems;
Senden eines Überweisungs-Modus-Signals, das den ausgewählten Überweisungs-Modus darstellt, und der auf der elektronischen Geld-Smartcard gespeicherten PIN zu dem Host-Computer;
Eingeben der Geheimnummer in Reaktion auf eine Anforderung von dem Host-Computer zum Senden der Geheimnummer;
Vergleichen der eingegebenen Geheimnummer mit einer Geheimnummer, die in dem Host-Computer gespeichert ist, und, wenn sie identisch miteinander sind, Eingeben einer Kontonummer in Reaktion auf eine Anforderung von dem Host-Computer zur Eingabe der Kontonummer;
Kodieren des Kontostandes der elektronischen Geld-Smartcard entsprechend dem Befehl des Host-Computers, der eine Prüfung des Kontostandes der elektronischen Geld-Smartcard anweist, und Senden von Informationen über den kodierten Kontostand zu dem Host-Computer;
Eingeben einer Geldsumme entsprechend einer Anforderung von dem Host-Computer zur Eingabe einer Geldsumme; und
Senden von Informationen über die kodierte Geldsumme von der elektronischen Geld-Smartcard zu dem Host-Computer entsprechend einem Überweisungs-Befehl von dem Host-Computer, wenn der Kontostand des Bankkontos über der eingegebenen Geldsumme liegt oder ihr entspricht.

11. Elektronisches Geldautomaten-Verfahren nach Anspruch 10, wobei das Verfahren des Weiteren die folgenden Schritte umfasst:
Angleichen des Kontostandes der elektronischen Geld-Smartcard nach dem Schritt des Sendens von Informationen über die kodierte Geldsumme von der elektronischen Geld-Smartcard zu dem Host-Computer; und
Anzeigen des angeglichenen Kontostandes der elektronischen Geld-Smartcard und des Kontostandes des Bankkontos, auf das die eingegebene Geldsumme eingezahlt wurde.

12. Elektronisches Geldautomaten-Verfahren nach Anspruch 10 oder 11, wobei der Schritt des Vergleichens der eingegebenen Geheimnummer des Weiteren den folgenden Schritt umfasst:
Anzeigen einer Nachricht, die die Eingabe einer weiteren Geheimnummer anfordert, wenn die eingegebene Geheimnummer nicht mit der in dem Host-Computer gespeicherten Geheimnummer übereinstimmt.

13. Elektronisches Geldautomaten-Verfahren nach Anspruch 10, 11 oder 12, wobei der Schritt des Sendens von Informationen über die kodierte Geldsumme von der elektronischen Geld-Smartcard zu dem Host-Computer des Weiteren den folgenden Schritt umfasst:
Anzeigen einer Nachricht, die den unzureichenden Kontostand des Bankkontos anzeigt, wenn der Kontostand des Bankkontos unter der eingegebenen Geldsumme liegt.

14. Elektronisches Geldautomaten-Verfahren nach Anspruch 5, wobei das Verfahren des Weiteren die folgenden Schritte umfasst:
Auswählen des Kontostand-Abfrage-Modus zum Abfragen des Kontostandes eines Bankkontos aus den angezeigten Unter-Modi;
Verbinden des audiovisuellen Empfängers mit dem Host-Computer der Bank, die die elektronische Geld-Smartcard ausgegeben hat, unter Verwendung des Modems;
Senden eines Kontostand-Abfrage-Modus-Signals, das den ausgewählten Kontostand-Abfrage-Modus darstellt, und der in der elektronischen Geld-Smartcard gespeicherten PIN zu dem Host-Computer;
Eingeben der Geheimnummer in Reaktion auf eine Anforderung von dem Host-Computer zum Senden der Geheimnummer; und
Anzeigen des Kontostandes des Bankkontos, wenn die eingegebene Geheimnummer mit einer in dem Host-Computer gespeicherten Geheimnummer übereinstimmt.

15. Elektronisches Geldautomaten-Verfahren nach einem der vorangehenden Ansprüche, wobei das Verfahren die folgenden Schritte umfasst:
Anzeigen eines Haupt-Bildschirmmenüs; und
Auswählen des elektronischen Geldautomaten-Modus aus dem angezeigten Haupt-Bildschirmmenü.

16. Elektronisches Geldautomaten-Verfahren nach Anspruch 15, wobei das Verfahren des Weiteren die folgenden Schritte umfasst:
Auswählen eines Telefonnummer-Einstellmodus aus dem angezeigten Haupt-Bildschirmmenü;
Eingeben der Bankleitzahl und Telefonnummer der Bank, die die elektronische Geld-Smartcard ausgegeben hat; und
Speichern von Daten, die die eingegebene Bankleitzahl und die Telefonnummer darstellen.

17. Elektronisches Geldautomaten-Verfahren nach Anspruch 16, wobei die gespeicherten Telefonnummer-Daten von dem Modem verwendet werden, um den audiovisuellen Empfänger mit dem Host-Computer zu verbinden.

18. Empfänger, der eine elektronische Geldautomaten-Funktion durchführt, **dadurch gekennzeichnet, dass**:
der Empfänger ein audiovisueller Empfänger ist, der gleichzeitig kostenfreie und kostenpflichtige Kanalsignale empfangen kann, wobei der audiovisuelle Empfänger umfasst:
eine Smartcard-Schnittstelle (214), die das Eingeben einer elektronischen Geld-Smartcard (212) anzeigt und eine persönliche Identifikationsnummer (PIN) von der elektronischen Geld-Smartcard (212) sendet;
ein Modem (224), das den audiovisuellen Empfänger mit einem Host-Computer einer Bank verbindet;
einen Speicher (222), der Daten, die ein Bildschirmmenü bezüglich eines elektronischen Geldautomaten-Modus und seine Unter-Modi darstellen, und Daten speichert, die eine Telefonnummer der Bank darstellen, die die elektronische Geld-Smartcard (212) ausgegeben hat, wobei die Unter-Modi wenigstens einen Lade-Modus zum Laden von Geld von einem Bankkonto des Benutzers auf die elektronische Geld-Smartcard (212), einen Überweisungs-Modus zum Überweisen von Geld von der elektronischen Geld-Smartcard (212) auf das Bankkonto und einen Kontostand-Abfrage-Modus zum Abfragen des Kontostandes des Bankkontos einschließen;
eine Steuerung (206), die den von einem Benutzer eingestellten elektronischen Geldautomaten-Modus und seine Unter-Modi erkennt und die Telefonnummer-Daten zu dem Modem (224) sendet, um das Modem (224) mit dem Host-Computer zu verbinden, die über die Smartcard-Schnittstelle gesendete PIN und die erkannten Unter-Modus-Daten zu dem Host-Computer sendet und ein Steuersignal entsprechend einem Befehl zum Durchführen des Unter-Modus anlegt, das von dem Host-Computer über das Modem (224) gesendet wird; und
einen OSD-Prozessor (218), der das Bildschirmmenü als On-Screen-Anzeige (OSD)-Informationen anzeigt und entsprechend dem Steuersignal eine Nachricht erzeugt, die erforderlich ist, um den Unter-Modus durchzuführen.

19. Empfänger nach Anspruch 18, wobei von einem Benutzer eingestellte Telefonnummer-Daten in dem Speicher (222) gespeichert werden.

## Revendications

1. Procédé d'exécution d'une fonction de terminal d'argent électronique, **caractérisé en ce que** :
le procédé est destiné à un récepteur audiovisuel incluant au moins une interface de carte à puce intelligente et un modem, et
ledit procédé comporte les étapes consistant à :
(a) contrôler qu'une carte à puce d'argent électronique est entrée dans l'interface de carte à puce d'un mode de terminal d'argent électronique et initialiser la carte à puce d'argent électronique,
(b) sélectionner un sous-mode pour le mode de terminal d'argent électronique, dans lequel ledit sous-mode inclut un mode de dépôt pour déposer de l'argent depuis un compte bancaire d'un utilisateur sur ladite carte à puce d'argent électronique, un mode de remise pour remettre de l'argent depuis ladite carte à puce d'argent électronique sur ledit compte bancaire, et un mode de demande de solde pour demander le solde dudit compte bancaire,
(c) connecter ledit récepteur audiovisuel à un ordinateur hôte d'une banque qui a délivré la carte à puce d'argent électronique, en utilisant ledit modem,
(d) transmettre le sous-mode sélectionné, un numéro d'identification personnel (PIN) mémorisé dans ladite carte à puce d'argent électronique, et un numéro secret entré depuis une source externe, audit ordinateur hôte, et
(e) exécuter ledit sous-mode sélectionné lorsque ledit numéro secret entré est identique à un numéro secret mémorisé dans ledit ordinateur hôte.

2. Procédé de terminal d'argent électronique selon la revendication 1, dans lequel ladite étape (a) comporte les étapes consistant à :
(a1) afficher un menu d'écran principal,
(a2) sélectionner un mode de terminal d'argent électronique depuis ledit menu d'écran principal affiché, et
(a3) initialiser une carte à puce d'argent électronique une fois que ledit mode de terminal d'argent électronique est sélectionné.

3. Procédé de terminal d'argent électronique selon la revendication 2, dans lequel ladite étape (a) comporte en outre les étapes consistant à :
(a4) sélectionner un mode d'établissement de numéro de téléphone depuis ledit menu d'écran principal affiché à l'étape (a1),
(a5) entrer le code bancaire et le numéro de téléphone de la banque ayant délivré ladite carte à puce d'argent électronique, et
(a6) mémoriser des données représentant lesdits code bancaire et numéro de téléphone entrés.

4. Procédé de terminal d'argent électronique selon la revendication 3, dans lequel à ladite étape (c), ledit récepteur audiovisuel est connecté audit ordinateur hôte en transmettant les données de numéro de téléphone mémorisées à ladite étape (a6) via ledit modem.

5. Procédé de terminal d'argent électronique selon la revendication 1, dans lequel ledit procédé comporte en outre les étapes consistant à :
établir un mode de terminal d'argent électronique,
recevoir la carte à puce d'argent électronique et initialiser ladite carte à puce, et
afficher les sous-modes du mode de terminal d'argent électronique sélectionné.

6. Procédé de terminal d'argent électronique selon la revendication 5, dans lequel le procédé inclut les étapes consistant à :
sélectionner le mode de dépôt pour déposer de l'argent depuis un compte bancaire d'un utilisateur sur ladite carte à puce d'argent électronique dans lesdits sous-modes affichés,
connecter ledit récepteur audiovisuel à l'ordinateur hôte de la banque qui a délivré ladite carte à puce d'argent électronique, en utilisant ledit modem,
transmettre un signal de mode de dépôt représentant le mode de dépôt sélectionné et le numéro d'identification personnel (PIN) mémorisé dans ladite carte à puce d'argent électronique, audit ordinateur hôte, et
entrer le numéro secret en réponse à une demande provenant dudit ordinateur hôte en vue de la transmission du numéro secret,
entrer une somme d'argent si ledit numéro secret entré est identique à un numéro secret mémorisé dans ledit ordinateur hôte, et
coder la somme d'argent entrée et transmettre l'argent codé à la carte à puce d'argent électronique lorsque le solde dudit compte bancaire est supérieur ou égal à ladite somme d'argent entrée.

7. Procédé de terminal d'argent électronique selon la revendication 6, dans lequel ledit procédé comporte en outre les étapes consistant à :
afficher des informations concernant le solde de ladite carte à puce d'argent électronique sur laquelle ladite somme d'argent entrée a été déposée, une fois que lesdites informations d'argent codé ont été transmises à ladite carte à puce d'argent électronique.

8. Procédé de terminal d'argent électronique selon la revendication 6 ou 7, dans lequel ladite étape consistant à entrer la somme d'argent comporte en outre l'étape consistant à :
afficher un message demandant l'entrée d'un autre numéro secret, lorsque ledit numéro secret entré n'est pas conforme au numéro secret mémorisé dans ledit ordinateur hôte.

9. Procédé de terminal d'argent électronique selon la revendication 6, 7 ou 8, dans lequel ladite étape consistant à coder la somme d'argent entrée comporte en outre les étapes consistant à :
afficher un message indiquant le solde insuffisant dudit compte bancaire lorsque le solde dudit compte bancaire est inférieur à ladite somme d'argent entrée.

10. Procédé de terminal d'argent électronique selon la revendication 5, dans lequel ledit procédé comporte en outre les étapes consistant à :
sélectionner le mode de remise pour remettre une somme d'argent de ladite carte à puce d'argent électronique sur ledit compte bancaire, depuis lesdits sous-modes affichés,
connecter ledit récepteur audiovisuel audit ordinateur hôte de la banque qui a délivré ladite carte à puce d'argent électronique, en utilisant ledit modem,
transmettre un signal de mode de remise représentant ledit mode de remise sélectionné et le numéro PIN mémorisé dans ladite carte à puce d'argent électronique audit ordinateur hôte,
entrer le numéro secret en réponse à une demande provenant dudit ordinateur hôte en vue de la transmission du numéro secret,
comparer ledit numéro secret entré à un numéro secret mémorisé dans ledit ordinateur hôte, et, s'ils sont identiques l'un par rapport à l'autre, entrer un numéro de compte en réponse à une demande provenant dudit ordinateur hôte pour l'entrée dudit numéro de compte,
coder le solde de ladite carte à puce d'argent électronique conformément à ladite instruction de l'ordinateur hôte ordonnant un contrôle du solde de ladite carte à puce d'argent électronique, et transmettre des informations concernant le solde codé audit ordinateur hôte,
entrer une somme d'argent conformément à une demande provenant dudit ordinateur hôte pour l'entrée d'une somme d'argent, et
transmettre des informations concernant ladite somme d'argent codée depuis ladite carte à puce d'argent électronique audit ordinateur hôte conformément à une instruction de remise provenant dudit ordinateur hôte, lorsque le solde dudit compte bancaire est supérieur ou égal à ladite somme d'argent entrée.

11. Procédé de terminal d'argent électronique selon la revendication 10, dans lequel ledit procédé comporte en outre les étapes consistant à :
ajuster le solde de ladite carte à puce d'argent électronique après ladite étape de transmission d'informations concernant ladite somme d'argent codée depuis ladite carte à puce d'argent électronique audit ordinateur hôte, et
afficher le solde ajusté de ladite carte à puce d'argent électronique et le solde dudit compte bancaire sur lequel ladite somme d'argent entrée a été déposée.

12. Procédé de terminal d'argent électronique selon la revendication 10 ou 11, dans lequel ladite étape consistant à comparer le numéro secret entré comporte en outre l'étape consistant à :
afficher un message demandant l'entrée d'un autre numéro secret, lorsque ledit numéro secret entré n'est pas conforme audit numéro secret mémorisé dans ledit ordinateur hôte.

13. Procédé de terminal d'argent électronique selon la revendication 10, 11 ou 12, dans lequel ladite étape de transmission d'informations concernant ladite somme d'argent codée depuis ladite carte à puce d'argent électronique audit ordinateur hôte comporte en outre l'étape consistant à :
afficher un message indiquant le solde insuffisant dudit compte bancaire, lorsque le solde dudit compte bancaire est inférieur à ladite somme d'argent entrée.

14. Procédé de terminal d'argent électronique selon la revendication 5, dans lequel ledit procédé comporte en outre les étapes consistant à :
sélectionner le mode de demande de solde pour demander le solde d'un compte bancaire, depuis lesdits sous-modes affichés,
connecter ledit récepteur audiovisuel audit ordinateur hôte de ladite banque qui a délivré ladite carte à puce d'argent électronique, en utilisant ledit modem,
transmettre un signal de mode de demande de solde représentant ledit mode de demande de solde sélectionné et le numéro PIN mémorisé dans ladite carte à puce d'argent électronique, audit ordinateur hôte,
entrer le numéro secret en réponse à une demande provenant dudit ordinateur hôte en vue d'une transmission dudit numéro secret, et
afficher le solde dudit compte bancaire lorsque ledit numéro secret entré est conforme à un numéro secret mémorisé dans ledit ordinateur hôte.

15. Procédé de terminal d'argent électronique selon l'une quelconque des revendications précédentes, dans lequel ledit procédé comporte les étapes consistant à :
afficher un menu d'écran principal, et
sélectionner le mode de terminal d'argent électronique depuis ledit menu d'écran principal affiché.

16. Procédé de terminal d'argent électronique selon la revendication 15, dans lequel ledit procédé comporte en outre les étapes consistant à :
sélectionner un mode d'établissement de numéro de téléphone depuis ledit menu d'écran principal affiché,
entrer le code bancaire et le numéro de téléphone de la banque qui a délivré ladite carte à puce d'argent électronique, et
mémoriser des données représentant lesdits code bancaire et numéro de téléphone entrés.

17. Procédé de terminal d'argent électronique selon la revendication 16, dans lequel lesdites données de numéro de téléphone mémorisées sont utilisées par le modem pour connecter ledit récepteur audiovisuel audit ordinateur hôte.

18. Récepteur qui exécute une fonction de terminal d'argent électronique **caractérisé en ce que** :
le récepteur est un récepteur audiovisuel qui peut recevoir simultanément des signaux de canaux gratuits et payants, ledit récepteur audiovisuel comportant :
une interface de carte à puce (214) pour indiquer l'entrée d'une carte à puce d'argent électronique (212) et transmettre un numéro d'identification personnel (PIN) depuis la carte à puce d'argent électronique (212),
un modem (224) pour connecter ledit récepteur audiovisuel à un ordinateur hôte d'une banque,
une mémoire (222) pour mémoriser des données représentant un menu d'écran concernant un mode de terminal d'argent électronique et ses sous-modes et des données représentant un numéro de téléphone de la banque qui a délivré ladite carte à puce d'argent électronique (212), lesdits sous-modes incluant au moins un mode de dépôt pour déposer de l'argent depuis un compte bancaire d'un utilisateur sur ladite carte à puce d'argent électronique (212), un mode de remise pour remettre de l'argent depuis la carte à puce d'argent électronique (212) sur ledit compte bancaire, et un mode de demande de solde pour demander le solde dudit compte bancaire,
un contrôleur (206) pour reconnaître ledit mode de terminal d'argent électronique établi par un utilisateur et ses sous-modes, et transmettre lesdites données de numéro de téléphone audit modem (224) pour connecter ledit modem (224) audit ordinateur hôte, transmettre ledit numéro PIN transmis via ladite interface de carte à puce et lesdites données de sous-mode reconnues audit ordinateur hôte, et appliquer un signal de commande conformément à une instruction pour exécuter ledit sous-mode transmis depuis ledit ordinateur hôte via ledit modem (224), et
un processeur OSD (218) pour afficher ledit menu d'écran en tant qu'informations d'affichage à l'écran (OSD) et générer un message, qui est requis pour exécuter ledit sous-mode, conformément audit signal de commande.

19. Récepteur selon la revendication 18, dans lequel les données de numéro de téléphone établies par un utilisateur sont mémorisées dans ladite mémoire (222).
